(19) Europäisches Patentamt
European Patent Office
Office européen des brevets

(11) **EP 2 044 425 B1**

(12) **EUROPEAN PATENT SPECIFICATION**

(45) Date of publication and mention
of the grant of the patent:
**11.11.2015 Bulletin 2015/46**

(51) Int Cl.:
**G01S 15/89** (2006.01)   **G01S 7/52** (2006.01)
**G01N 29/06** (2006.01)   **G01S 15/10** (2006.01)
**A61B 8/00** (2006.01)   **G03B 42/06** (2006.01)

(21) Application number: **07719152.6**

(22) Date of filing: **02.07.2007**

(86) International application number:
**PCT/AU2007/000915**

(87) International publication number:
**WO 2008/003127 (10.01.2008 Gazette 2008/02)**

(54) **IMPROVED ACOUSTIC IMAGING METHOD AND APPARATUS**

VERBESSERTES AKUSTISCHES ABBILDUNGSVERFAHREN UND VORRICHTUNG

PROCÉDÉ ET APPAREIL D'IMAGERIE ACOUSTIQUE PERFECTIONNÉS

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **07.07.2006 AU 2006904357 P**

(43) Date of publication of application:
**08.04.2009 Bulletin 2009/15**

(73) Proprietor: **Signostics Pty Ltd.**
**Thebarton, S.A. 5031 (AU)**

(72) Inventors:
• **MEDLIN, Andrew, John**
**Torrensville SA 5031 (AU)**
• **NIEMIEC, Andrew, John, Paul**
**Torrensville SA 5031 (AU)**
• **BARLETT, Stewart, Gavin**
**Torrensville SA 5031 (AU)**
• **COSTELLO, Roger, Michael**
**Winthrop, Western Australia 6150 (AU)**

(74) Representative: **Beresford, Keith Denis Lewis et al**
**Beresford Crump LLP**
**16 High Holborn**
**London WC1V 6BX (GB)**

(56) References cited:
WO-A1-99/58061          WO-A1-2005/033737
WO-A1-2006/003555       WO-A1-2006/003555
GB-A- 1 108 567         US-A1- 2002 147 398
US-A1- 2005 075 565     US-A1- 2007 038 108
US-B1- 6 440 074        US-B1- 6 440 074

• **MICHALAKIS A. AVERKIOU: "Self-demodulation of amplitude- and frequency-modulated pulses in a thermoviscous fluid", THE JOURNAL OF THE ACOUSTICAL SOCIETY OF AMERICA, vol. 94, no. 5, 1 January 1993 (1993-01-01), page 2876, XP055057658, ISSN: 0001-4966, DOI: 10.1121/1.407344**
• **VINCENT TOURNAT ET AL: "Self-demodulation acoustic signatures for nonlinear propagation in glass beads", COMPTES RENDUS MECANIQUE, vol. 331, no. 2, 1 February 2003 (2003-02-01), pages 119-125, XP055057660, ISSN: 1631-0721, DOI: 10.1016/S1631-0721(02)00007-4**
• **LIU ET AL.: 'Acoustic microscopy system: design and preliminary results' ULTRASONICS vol. 42, 2004, pages 337 - 341, XP004499855**

## Description

## FIELD OF THE INVENTION

The present invention relates to a method and apparatus for the transmission and reception of acoustic waves for the purpose of imaging.

## BACKGROUND OF THE INVENTION

A variety of equipment and methods exist for imaging using ultrasound energy, with applications in medical imaging, industrial non-destructive testing, and underwater imaging. In general, these systems transmit an ultrasound pulse and wait for returned echoes generated by changes of impedance of the structures being imaged. The returned echoes are processed and displayed on a screen as an image, a graph, or some other format. The quality of the image and data generated is dependent on many factors, but two important factors are the beam width at the point of reflection and the length of the pulse transmitted. Narrow beams provide improved lateral resolution and short pulses provide improved axial resolution.

The early ultrasound systems used a single ceramic transducer operating in A-mode, or amplitude mode. These systems transmitted an ultrasound pulse and waited for the received echoes, and plotted the amplitude of the received echoes versus time. Advances of this system included static B-mode systems, where the transducer was mounted on a mechanical arm, and the returned echoes were used to draw a grey scale image. These systems were still in use up to the mid 1980s, but were then rapidly replaced with real-time beam-forming systems.

Early beam-forming transducers were experimented with in the early 1970s. By the mid 1980s the construction and operation had improved enough that the image quality started to surpass the static B-mode systems. Beam-forming transducers have a large number of ceramic elements manufactured in an array, and include linear transducers, phased-array transducers, and convex transducers. The most common transducers are 1D arrays where the beams of the transducers can be generated in different directions or offsets in the same plane to create an image. The number of ceramic elements is usually between 64 and 256 elements, and improvements in methods have included transmit focusing, where users can select the region of transmit focus; and receive beam-forming, where a greater gain is applied to particular scan lines relative to the gain applied to other scan lines. The improvements are all relevant in the scan plane, but in the plane perpendicular to the scan plane a fixed focal length is used and beam width and beam divergence are important considerations.

Methods to improve focus in both the scan plane and the perpendicular plane exist. The most common is the construction of 1.5D arrays, where the scan plane contains a row of elements (usually greater than 64 to 256) and the perpendicular plane contains a small column of elements (usually 4). The resultant array enables dynamic focus in both the scan plane and the perpendicular plane, but the large number of elements results in a very expensive system.

The quality of any ultrasound imaging system is affected by the side-lobes produced by the transducer. All transducers produce side-lobes when transmitting a pulse. Side lobes reduce the effective efficiency of the transducer, but more importantly are a source of noise in the receive signal. The relative intensity of the side-lobes is reduced by using higher frequency transducers, therefore a transducer system using higher frequency pulses will have superior transmit characteristics to a transducer system using lower frequency pulses, at least in part due to the reduction in side lobes.

Axial resolution (also known as the depth, linear, longitudinal and range resolution) is the minimum distance in the beam direction between two reflectors which can be identified as separate echoes. The axial resolution is slightly more than half the spatial pulse length, which is the number of waves in the transmitted ultrasound pulse multiplied by their wavelength.

Transducer bandwidth and pulse length are related. Theoretically, only infinite sine waves have a single frequency. The beginning and end of an ultrasound pulse introduce a range of frequencies; the shorter the pulse, the wider its frequency spectrum. A low bandwidth transducer will respond to a short voltage pulse with a relatively long lasting vibration, emitting ultrasound with a narrow bandwidth, but a long pulse length. This gives poor axial resolution.

A broadband transducer will emit a short pulse of ultrasound consisting of a broad range of frequencies, which will improve axial resolution, but there are limitations to the width of passband which can be achieved with practical transducers. There is also the problem that increasing transducer bandwidth leads to reduced efficiency in driving the transducer.

There exists a need to obtain improvements in ultrasound imaging technology to enable improved image quality without increased cost.

US 2002/147398 A1 discloses an ultrasonic diagnostic apparatus including an ultrasonic probe, a transmitter for transmitting an ultrasonic wave pulse having peaks at fundamental frequencys, and a receiver for receiving an echo signal corresponding to the ultrasonic wave pulse. The echo signal contains a difference frequency component as well as a fundamental frequency component centered on a fundamental frequency. A difference frequency component is extracted by attenuating the fundamental frequency component of the echo signal. Ultrasonic image data is generated on the basis of the extracted difference frequency component.

WO 2006/003555 A1 discloses an ultrasonic imaging system which transmits waveforms containing first and second major frequency components which are intermodulated by passage through a nonlinear medium or interaction with a contrast agent microbubble to produce a difference frequency component. In an embodiment the second major frequency is twice the frequency of the first major frequency, resulting in a difference frequency signal at the first major frequency. Two differently modulated transmit waveforms are transmitted and the difference frequency component is separated by pulse inversion.

US 6440074 B1 discloses an ultrasonic diagnostic imaging system and method for performing nonlinear echo signal imaging with sum or difference frequency signal components. The sum or difference frequency components are produced by nonlinear effects of tissue or contrast agents and are advantageously separated from the fundamental transmit components of the echo signals by pulse inversion processing. The transmit frequency components are located at frequencies chosen so that the sum or difference frequency components to be used for imaging fall in the central, most sensitive, region of the transducer passband. The beam profiles of the sum or difference frequency components exhibit improved signal to clutter ratios and lateral resolution characteristics as compared to the transmit beam characteristics.

"Self-demodulation of amplitude- and frequency-modulated pulses in a thermoviscous fluid" from The Journal of the Acoustical Society of America, vol. 94, no. 5, page 2867, (XP055057658) describes the self demodulation of pulsed sound beams in a thermoviscous fluid using the Khokhlov-Zabolotskaya-Kuznetsov nonlinear parabolic wave equation and discloses a quasilinear analytic solution which describes the main features of the waveform.

"Self-demodulation acoustic signatures for nonlinear propagation in glass beads" from Comptes Rendus Mecanique, vol. 331, no. 2, pages 119-125, (XP055057660) describes the nonlinear propagation of acoustic waves in granular media such as unconsolidated glass beads using a high power ultrasonic broad-band transducer.

GB 1108567 A discloses an intensity-modulated cathode ray tube display system for use with radar, echosounding, and ultrasonic flaw-detection apparatus, the sensitivity of the apparatus is varied for successive transmitted pulses and the echoes produced from a given reflecting object by the successive transmitted pulses are displayed spaced apart on the screen. In a flawdetection embodiment, echo signals from a testpiece are displayed along the horizontal timebase of a cathode ray tube. The gain of an amplifier through which the echo signals are passed is varied for successive transmitted pulses, and successive sweeps of the trace on the tube are displaced in the vertical direction to produce a display in which successive echoes from a given object are displayed above each other. Comparison of the traces at different sensitivities enables large amplitude echoes (which result in defocussing of the luminous spot of the trace at high sensitivities) to be distinguished from small-amplitude echoes of extended flaws.

SUMMARY OF THE INVENTION

In one aspect, the invention provides a method of medical ultrasound imaging a body having nonlinear acoustic propagation properties, the method including, transmitting an acoustic transmit signal comprising a pulse including at least one transmit acoustic frequency such that at least some of the acoustic energy of the pulse is transmitted into the body, the body producing in response to the acoustic energy a demodulation of the transmit pulse as a demodulated signal, and receiving an acoustic receive signal comprising echoes of the demodulated signal, the receive signal having a frequency approximately equal to the frequency of the demodulated signal, wherein the pulse has an amplitude rise time which is significantly less than its amplitude decay time, such that the demodulated signal is not more than one cycle in duration.

In another aspect, the invention provides an apparatus for medical ultrasound imaging a body having nonlinear acoustic propagation properties, the apparatus including, a first transducer adapted to transmit an acoustic transmit signal in response to an applied user variable electrical excitation signal and to produce an electrical received signal in response to an acoustic receive signal, said electrical received signal comprising echoes of a demodulated signal produced by the body in response to the acoustic transmit signal, electrical transmit circuitry adapted to produce the user variable electrical excitation signal, electrical receive circuitry adapted to process the electrical received signal, said electrical receives signal comprising, and a display device adapted to display the results of said processing, wherein the electrical excitation signal is controlled by the electrical transmit circuitry so that the transmit signal comprises a discrete transmit pulse having an amplitude rise time significantly less that its amplitude decay time so that, in use, the demodulated signal is not more than one cycle in duration.

BRIEF **DESCRIPTION** OF THE DRAWINGS

Figure 1 shows a schematic representation of a hand held ultrasound apparatus incorporating an embodiment of the invention.

Figure 2 shows a plot of a frequency spectrum of a transmit transducer.

Figure 3 shows an idealised excitation pulse in the time and frequency domains.

Figure 4 shows a transmit signal in accordance with the invention, in the time and frequency domains.

Figure 5 shows the transmit signal of figure 4 as it would be at 60mm depth in human tissue, in both the time and frequency domains.

Figure 6 shows a transmit signal of the prior art.

Figures 7a-f. show simulations of an ultrasound signal of the prior art at succeeding penetration depths.

Figures 8a-f. show simulations of an ultrasound signal in accordance with the invention at succeeding penetration depths.

Figure 9 shows resolution results of a simulation of a prior art system.

Figure 10 shows resolution results of a simulation of a system utilising the invention.

Figure 11 shows a simulation of a waveform and corresponding frequency spectrum a Gaussian enveloped sine wave for a transmit signal with a peak at a frequency of 10.5MHz.

Figure 12 shows the demodulated signal for the system of Figure 11.

Figure 13 shows a simulated long burst transmit signal in the time and frequency domain.

Figure 14 shows the demodulated signal for the system of Figure 13.

Figure 15 shows a transmit signal for an alternative embodiment of the invention.

Figure 16 shows the demodulated signal for the system of Figure 15.

## DETAILED DESCRIPTION

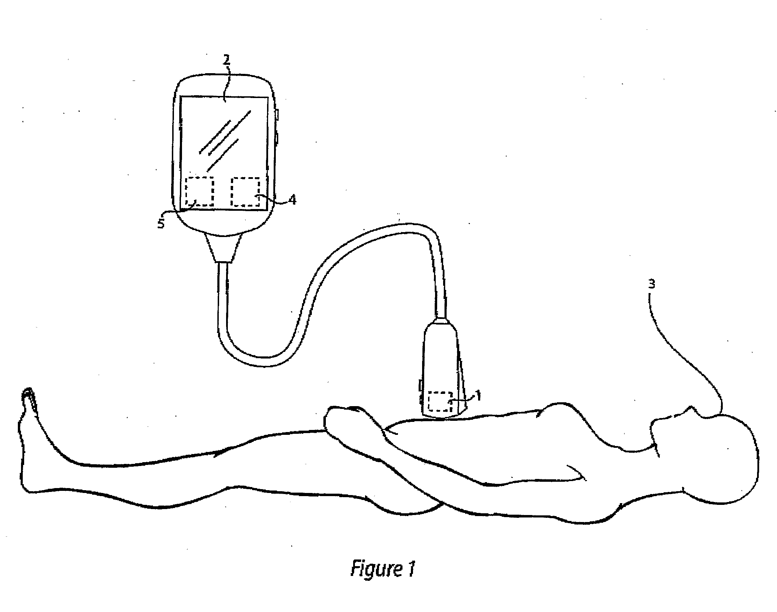

Figure 1 shows a handheld ultrasound transmission, reception and analysis device, schematically represented in use in a medical diagnostic setting. The illustration is not to scale.

An acoustic transmit signal is transmitted into a medium to be imaged 3 by use of a broadband piezoelectric transducer 1.

A receive signal is generated by the interaction of the transmit signal with the medium to be imaged, the target medium.

The receive signal is received by transducer 1, and the resulting receive signal is analysed by receive circuitry

The results of the analysis are displayed on an image forming display 2 and are referred to as an image, but it should be understood that image forming is not an essential part of the method and the results of the analysis of the received signal may be communicated to a user or other recipient in any appropriate way, including, but not limited to: audible sounds, text displays and lights or patterns of lights.

The transducer 1 acts as a passband filter, with the pass frequency being the resonant frequency of the transducer crystal. The transducer is stimulated to oscillate by means of an electrical excitation signal tuned to a desired excitation frequency, provided by excitation control circuitry 4. This excitation frequency lies within the passband of the transducer. The filtering of the electrical signal by the transducer generates the waveform of the acoustic transmit signal.

The invention may be embodied in a hand held medical diagnostic device as shown in figure 1, or in any other configuration in which ultrasound equipment is made or used.

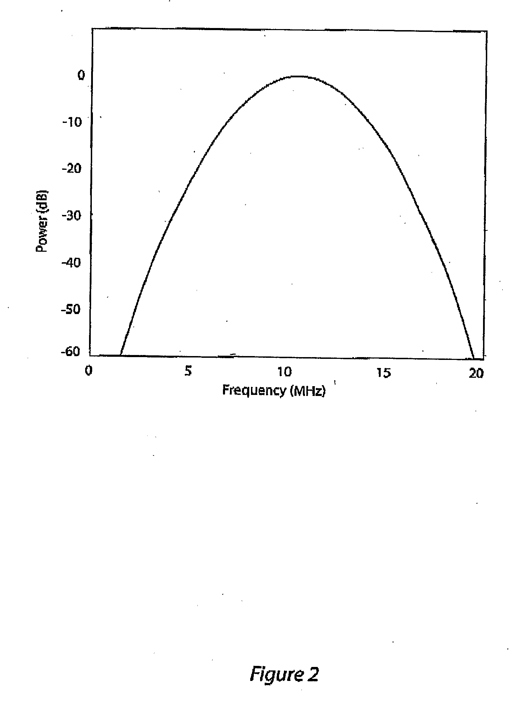

The frequency spectrum of the transducer 1 is in the form of a broad pass band with a peak centred on a desired carrier frequency, which typically would be a frequency in the range 8-16 MHz. However, carrier frequencies outside this range may also be used. In the embodiment illustrated, the transducer 1 has a transducer frequency spectrum with a peak at 10.5 MHz as shown in Figure 2.

Preferably, there is transmitted a single transmit carrier frequency within a pulse of short duration. The pulse duration and the spectral content of the signal are related such that the shorter the pulse duration, the broader the spectral content of the signal. In order to pass all the spectral content of the excitation signal and so preserve the short pulse length, the transducer must have a sufficiently broad pass band.

The larger the bandwidth, the shorter the acoustic output signal in the time domain, but the lower the conversion efficiency from electrical to acoustic energy. The spectrum of Figure 2 has a bandwidth which yields about 70% efficiency.

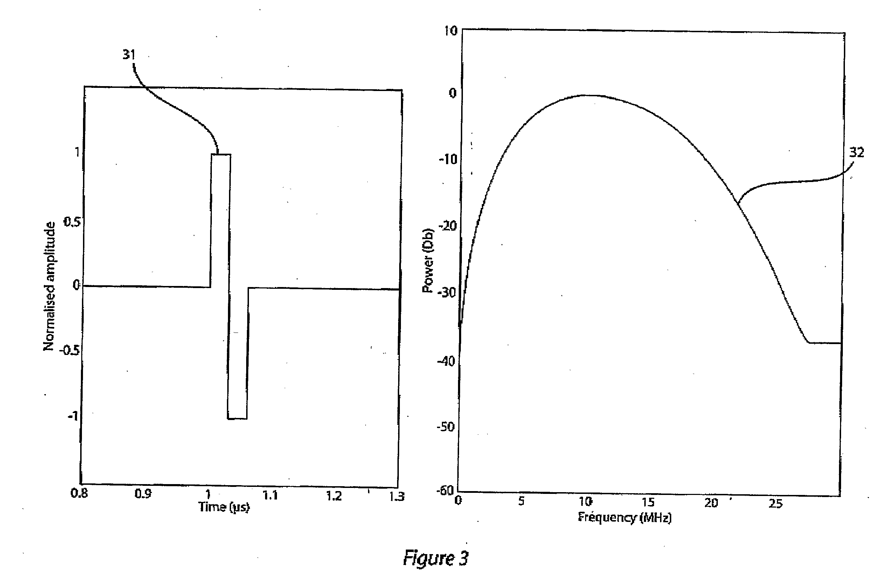

The transmitting transducer is preferably broadband by design so that it can pass the broad range of frequencies required to generate a transmit signal of short pulse duration. A transmit signal is generated by stimulating a transducer 1 with a cyclic electronically controlled signal. In a preferred embodiment, this is a pulse, called an excitation pulse. An exemplary excitation pulse 31 is shown in Figure 3. The excitation pulse is spectrally filtered by the transducer to produce a transmit signal pulse.

The electronic excitation pulse excites vibrations in the transducer which propagate into the surrounding medium in the form a directed beam of acoustic waves. The excitation pulse itself consists of a spectrum of frequencies. The short pulsed nature of the excitation means that the spectral content of the excitation pulse will also be broadband.

Preferably, the excitation pulse is generated in such a way that the peak in its frequency spectrum coincides with the peak pass band of the transducer, in this way ensuring the optimal conversion of electrical into acoustic energy as the transmit transducer filters the excitation signal.

The excitation pulse amplitude is typically in the order of $\pm 100$ Volts, although this may vary widely, depending on the application. In order to maximise the signal-to-noise ratio for imaging, the excitation signal is preferably maximal to maximise the strength of the transmit signal within component and safety constraints.

The transmit signal from the transducer results from the conversion of electrical energy in the form of an excitation pulse into acoustic energy. The spectral content of the acoustic transmit pulse consists of the spectral content of the excitation pulse 31 filtered by the spectral response of the transmit transducer 1.

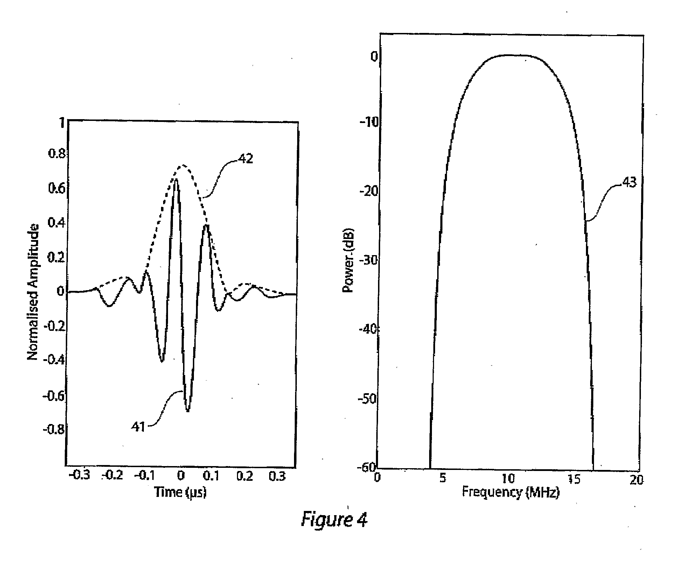

Applying the electrical excitation signal shown in Figure 3 to the transmit transducer 1 having the frequency response as illustrated in Figure 2 results in a transmit signal 41 centred on 10.5 MHz as shown in Figure 4.

The shape of the transmit signal pulse 41 can be traced by its envelope 42, as shown in Figure 4. For a transducer of 70% bandwidth, the transmit signal contains approximately 3 cycles of the carrier frequency. The envelope pulse length is the envelope width centred on the peak. It is the envelope pulse length of the demodulation signal which finally determines the imaging resolution in the direction of wave propagation.

As large a wave amplitude as possible is desirable, within practical and safety limits, in order to maximise the strength of the demodulated receive signal.

The acoustic transmit signal from the transmit transducer propagates into the target medium in a directed beam. For media with nonlinear properties (such as human tissue), the signal demodulates to a short, low frequency pulse.

The demodulated signal is a highly penetrating signal with the resolution typically associated with a much higher frequency. This demodulated signal is reflected by features in the media to be imaged and forms the receive signal.

The receive signal is received by transducer 1 and the resultant electronic signal is transmitted to receive electronics 5, for analysis and display on the image forming display 2.

In other embodiments, the receiving transducer may be a separate transducer to the transmitting transducer. In either case, the receive transducer constitutes an additional filter to the acoustic signal prior to reception by the receive electronics.

The demodulation frequency can be arbitrarily tuned to within a factor of $N$ of the carrier frequency, where N is the approximate number of cycles in the carrier pulse (for a 70% bandwidth, $N \sim 3$).

Even though a single cycle of a square wave is applied to the transducer, multiple cycles of acoustic output are produced. The broader the bandwidth of the transmit transducer, the fewer the cycles in the transmit signal, but with a corresponding loss of efficiency (loss of acoustic pulse amplitude).

The demodulation centre frequency is related to the width of the envelope of the carrier pulse. The shorter the envelope, the higher the centre frequency of the demodulated signal. This permits arbitrary tuning of the demodulation frequency to any frequency within a factor of N of the carrier frequency. To a good approximation, the fully demodulated signal in the time domain tends towards the shape of the second derivative (i.e. the curvature) of the envelope squared of the initial transmit signal.

For highly attenuating nonlinear media with properties comparable to human tissue, and with an initial acoustic signal of high carrier frequency (8-16 MHz), complete demodulation occurs over a short distance (typically a few cm). After this distance, the demodulated waveform continues to propagate through the medium with much lower attenuation than the original transmit signal because the signal is predominantly low frequency. As discussed, signal attenuation in the target media increases with increasing signal frequency.

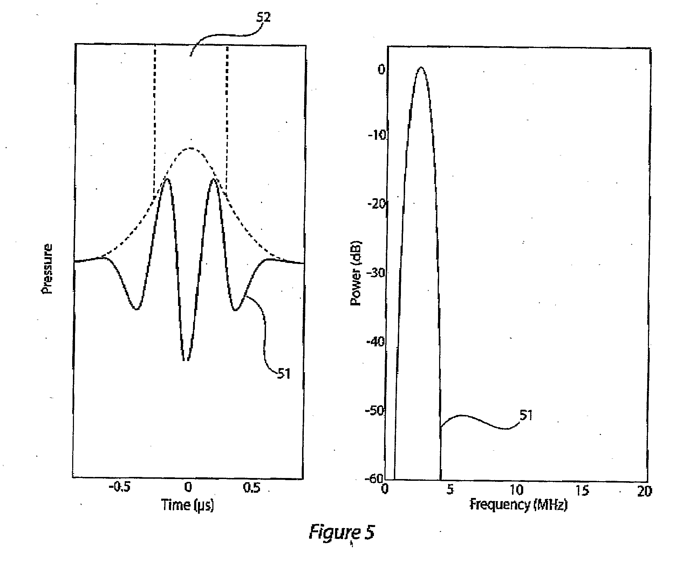

This is shown in Figure 5, showing the transmit signal of figure 4 as it would be at 60mm depth in human tissue, in both the time and frequency domain. As can be seen, the attenuation of the signal at the transmitted frequency of 10.5 MHz is essentially complete. No useful imaging at this depth could be achieved by receiving a signal at the transmit frequency.

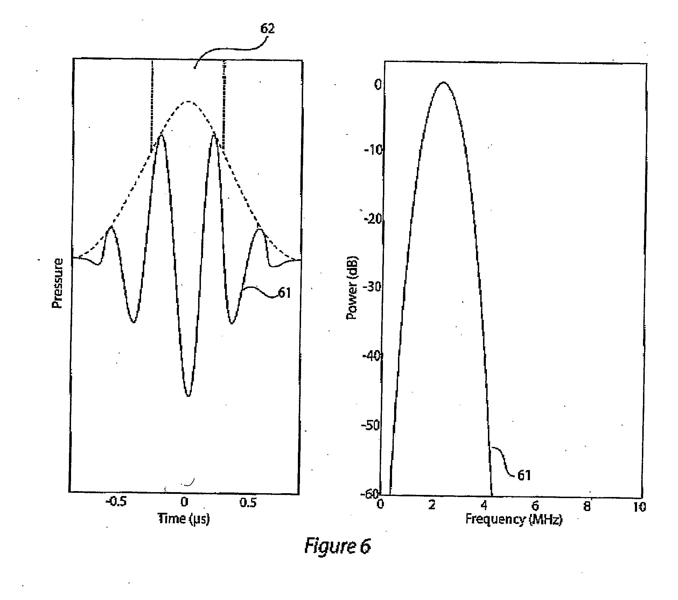

The conventional solution to this would be to use a lower transmit frequency to achieve greater penetration. This would give the result illustrated in Figure 6. This shows a transmit signal of 3.5Mhz, also as it would be at 60mm depth in human tissue. As can be seen, significant energy remains at the transmit frequency of 3.5MHz, and useful imaging can be done by receiving at the transmit frequency. The receive signal 61 is shown.

An advantage of the present invention may be seen when comparing the pulse length of the receive signals. The receive signal in the case of Figure 5 is signal 51, also at 3.5MHz. The effective pulse length 52, is about 1.01 mm. The effective receive signal pulse length 62, for the direct transmission case of Figure 6 is 1.23mm.

Axial resolution is a function of receive signal pulse length. The pulse length for the demodulated signal of the invention is significantly shorter than that of the prior art method of transmitting directly at the desired receive signal frequency. This leads to improved axial imaging resolution.

A further advantage of the present invention stems from the fact that the amplitude of the demodulation signal increases as the frequency decreases. In order to generate a demodulated signal, the pressure wave needs to be of sufficient amplitude, as the nonlinear effect is proportional to the pressure. At lower frequencies, the attenuation is correspondingly lower, resulting in an increased transfer of energy to the demodulation frequency at greater depth.

This is equivalently stated by the relationship of the Gol'dberg number to the carrier frequency:

$$\Gamma = \frac{\beta p_0}{\pi D \rho_0 f_c}$$

where $\beta$ = nonlinearity parameter, $p_0$ = source pressure, D = sound diffusivity (proportional to the attenuation coefficient), $\rho_0$ = ambient density and $f_c$ = carrier frequency. As the carrier frequency increases, the Gol'dberg number decreases, meaning that the nonlinear mechanism has a relatively weaker effect.

The energy available at the imaging frequency at the imaging depth is obviously a prime determinant of image quality, since it determines the maximum strength of the receive signal.

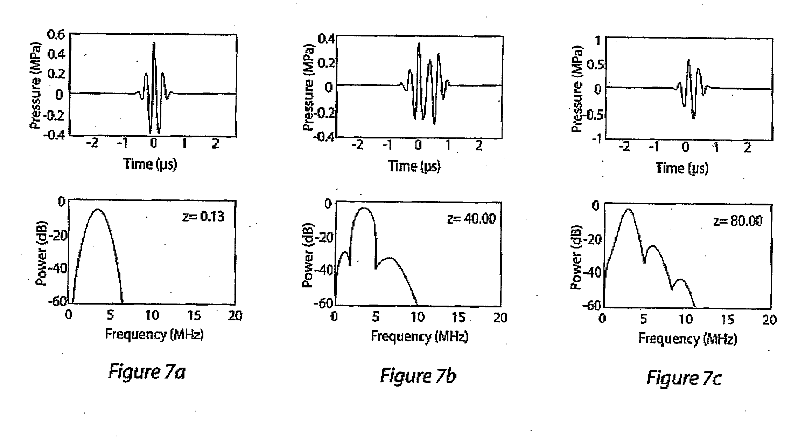

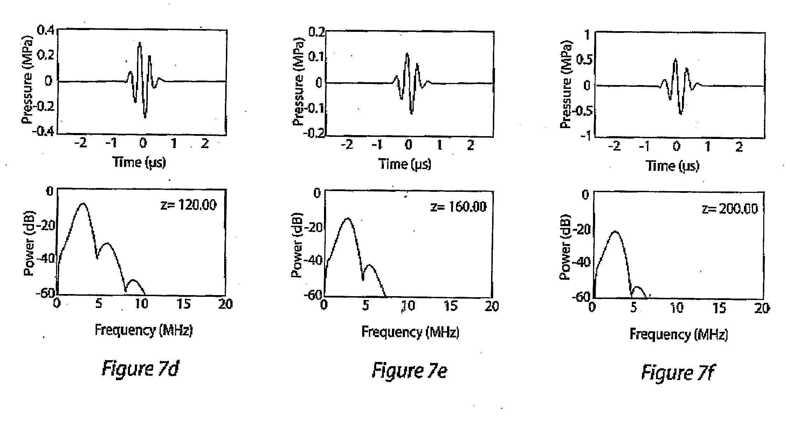

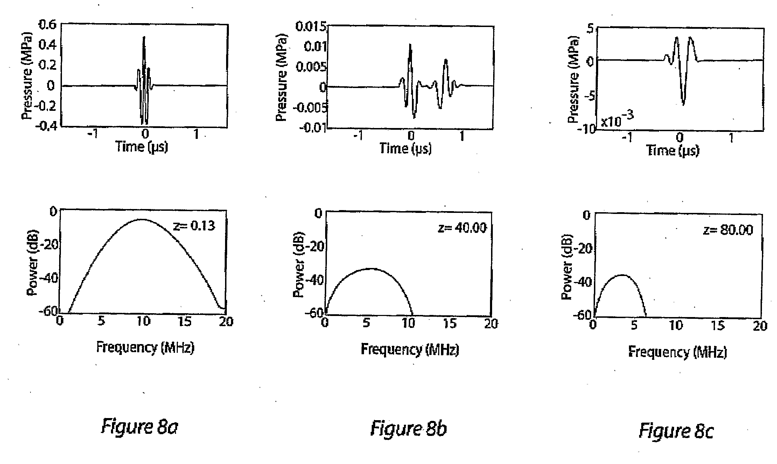

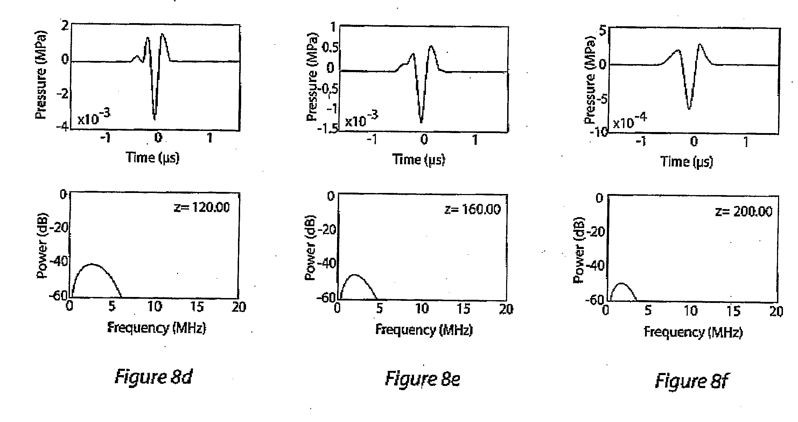

This is illustrated in Figures 7 and 8. These show simulations of an ultrasound signal from a transducer with a radius of 10mm and an acoustic focal length of 125mm. Each figure shows a transmit signal in both the time and frequency domains in human tissue at 6 depths: 013mm, 40mm, 80mm, 120mm, 160mm and 200mm.

Figure 7 illustrates the prior art, where a lower frequency transmit signal (in this case 3.5MHz) is chosen to give useful acoustic energy penetration for imaging, with the receive signal being received at the same frequency as the transmit frequency.

The computed time and frequency domain signals are shown in Figure 7a-f. Figure 7a shows the initial waveform and frequency spectrum.

A simulation of a 10.5 MHz transmit signal demodulating to a 3.5 MHz receive signal, in accordance with the invention, is shown in Figure 8. The computed time and frequency domain signals are shown in Figure 8a-f. Figure 8a shows the initial waveform and frequency spectrum.

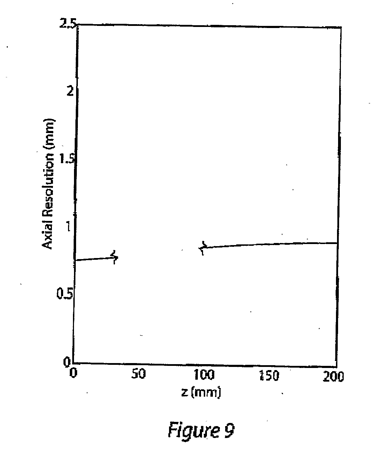

The results of Figure 8 show that for a 10.5 MHz carrier signal in human tissue, demodulation is complete by about 80 mm depth. From this depth onwards, we see a very short, low frequency pulse containing about 2 cycles of the demodulation frequency of 3.5Mhz. Such a short pulse cannot be produced by the prior art method of direct electronic excitation of a 3.5 MHz transducer The axial and lateral resolution obtained for the 3.5 MHz direct transmission prior art case are shown in Figure 9. Figure 9 shows a minimum beam width of about 3.4 mm at a depth of 80 mm, at which point the axial resolution is about 0.87 mm. It can be seen that the axial resolution remains almost constant to 200mm depth.

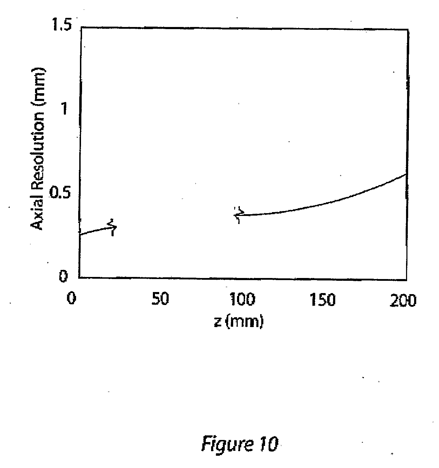

For the example of the current invention, as illustrated in Figure 8, the axial and lateral resolution is shown in Figure 10. The minimum beam width is 3.3 mm at about 95 mm depth, with a corresponding axial resolution of 0.4 mm. This is a significant improvement over the prior art case, and allows for features to be resolved which are have less than half the separation that would be required in the prior art case.

It can be seen from Figure 10 that even at the maximum illustrated 200 mm depth, the axial resolution is 0.63 mm, which is still better than the best axial resolution for the prior art case, illustrated in Figure 9, of 0.87 mm axial resolution.

In a further embodiment, the demodulation process is employed to generate a single cycle, low frequency pulse which approaches the shortest practically possible duration. This allows axial resolution very close to the absolute theoretical maximum to be achieved.

As stated previously, the demodulation pulse waveform, when fully developed and neglecting attenuation, assumes the shape of the second derivative squared of the envelope of the transmit pulse. Geometrically, the second derivative is interpreted as the curvature of the envelope shape. Positive curvature is called concave (opens upwards), and negative curvature is called convex (opens downwards).

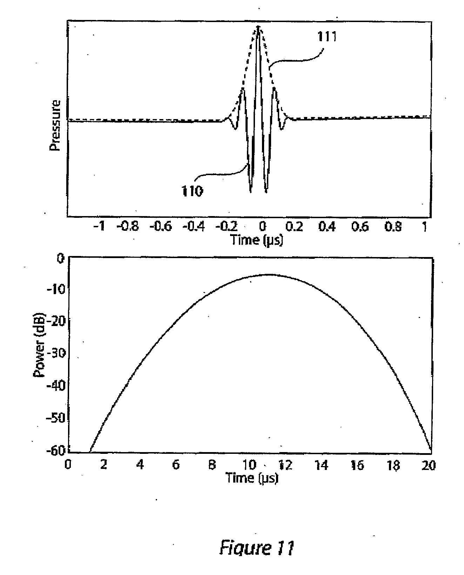

Figure 11 shows a simulation of a waveform and corresponding frequency spectrum of a Gaussian enveloped sine wave for a transmit signal with a peak at a frequency of 10.5MHz.

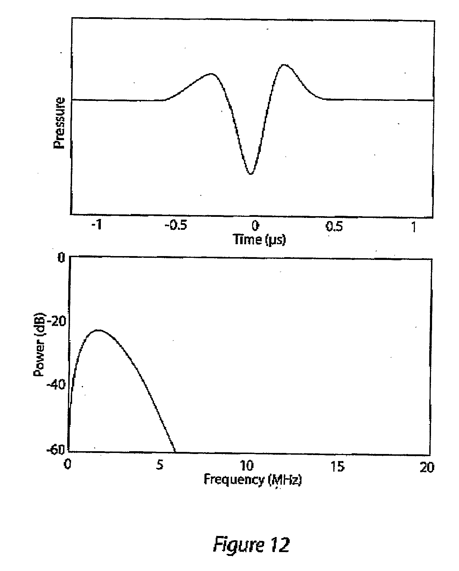

At the beginning of the Gaussian envelope, the curvature is positive, in the middle of the envelope about the peak it is negative, and at the end it is positive again. This gives rise to the demodulated signal shown in Figure 12. The degree of curvature, which is greatest in the negative curvature region about the peak of the Gaussian envelope, corresponds directly to the magnitude of the demodulated signal where the negative peak is of higher magnitude than the positive peaks.

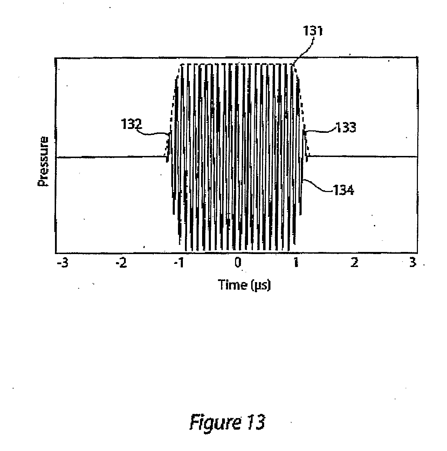

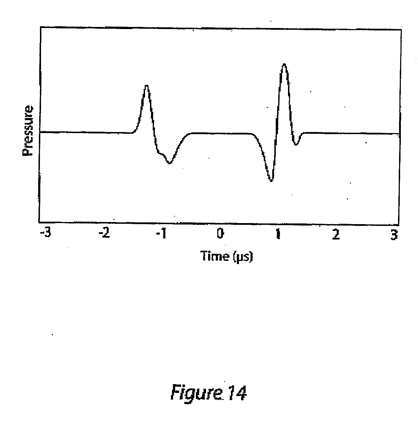

A simulated long burst of tone is illustrated in the time and frequency domain in Figure 13. The demodulated signal is shown in Figure 14.

During a long tone burst, the envelope has high curvature at the beginning and end of the pulse, but in the middle the curvature is zero. As illustrated in Figure 14, the demodulated signal consists of a separated pair of short, quasi-single cycle pulses, one corresponding to the initial rise of the envelope and the other corresponding to the fall of the envelope.

Each pulse in the pair resembles a quasi ideal, shortest possible acoustic pulse. Comparison of the demodulation signal in Figure 14 with that of Figure 5 leads to the conclusion that the demodulated signal of Figure 5 may be seen as a merged pair of such pulses from the rise and fall stages of the Gaussian envelope.

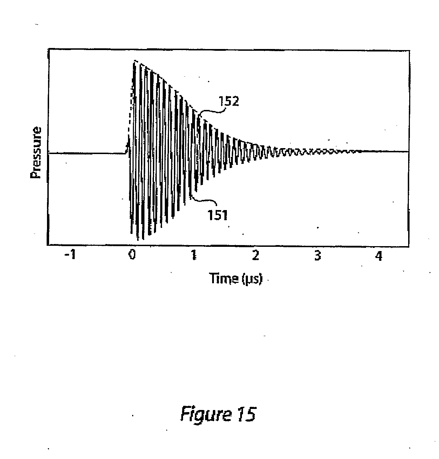

In this embodiment, a transmit signal in the form of a slow decay signal burst is transmitted by transducer 1. The transmit signal is illustrated in Figure 15. As can be seen, the rise time of the envelope of the signal is short, and the decay time is relatively long.

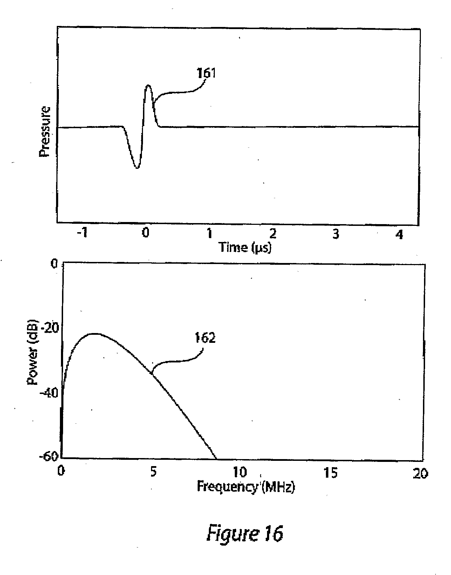

The demodulation signal, as shown in Figure 16 includes a high amplitude, quasi-single cycle pulse derived from the envelope rise, and a much weaker amplitude pulse derived from the fall.

The shape of the fall in the envelope may be controlled such that its curvature is sufficiently small such that the demodulated waveform is very close to a low frequency, single cycle pulse. Such a pulse is close to the ideal, theoretically best possible waveform for imaging. It is not possible to generate such an ideal waveform directly with a finite bandwidth transducer.

With such a single cycle, low frequency pulse, the highest possible axial resolution is achieved because the pulse is as short as possible. Simulation shows that such a demodulated waveform can be generated in the first few on of tissue, making it feasible for imaging at low frequency and high resolution from a few cm onwards.

It is advantageous to produce a continuous transmit signal for imaging. This is particularly the case for Doppler imaging. A continuous, single frequency signal will not produce a demodulation effect. The envelope of such a signal is a straight line, and, in the theoretical case of a perfect single frequency signal of unvarying amplitude, no demodulation signal is produced.

In a further example, a transmit signal combines pulses at each of two frequency components, $f_1$ and $f_2$. This is transmitted by a transmit transducer into a medium to be imaged having non-linear acoustic response, such as human tissue. The demodulation signal produced by the interaction between the two components in the non-linear medium will be a pulse signal at the beat or difference frequency, $f_1$-$f_2$. A receive signal for imaging is received at this demodulation frequency by a receive transducer, which may be the same transducer as the transmit transducer.

As in the illustrated embodiment, the pulse length of the transmit pulse in a practical system will be several wavelengths. The demodulation signal, at a lower frequency, will be of a lesser number of wavelengths. This will give an improvement in the axial resolution of the imaging.

The transmit pulse length and the transmit pulse frequencies may be chosen to reduce the pulse length of the demodulation frequency to a single wavelength, for the greatest improvement in axial resolution.

## Claims

1. A method of medical ultrasound imaging a body (3) having nonlinear acoustic propagation properties, the method including:

   transmitting an acoustic transmit signal in the form of a slow decay signal burst including at least one transmit acoustic frequency such that at least some of the acoustic energy of the transmit signal is transmitted into the body (3);
   the body (3) producing in response to the acoustic energy a demodulation of the transmit signal as a demodulated signal; and
   receiving an acoustic receive signal comprising echoes of the demodulated signal, the receive signal having a frequency approximately equal to the frequency of the demodulated signal;
   wherein the envelope of the transmit signal has an amplitude rise time which is significantly less than its amplitude decay time, such that the demodulated signal is not more than one cycle in duration.

2. The method of claim 1 wherein the demodulated signal comprises a quasi-single cycle pulse.

3. The method of any one of the preceding claims wherein the body to be imaged is at least a part of a living mammal.

4. An apparatus for medical ultrasound imaging a body (3) having nonlinear acoustic propagation properties, the apparatus including:

   a first transducer (1) adapted to transmit an acoustic transmit signal in the form of a slow decay signal burst in response to an applied user variable electrical excitation signal and to produce an electrical received signal in response to an acoustic receive signal, said electrical received signal comprising echoes of a demodulated signal produced by the body in response to the acoustic transmit signal;
   electrical transmit circuitry (4) adapted to produce the user variable electrical excitation signal;
   electrical receive circuitry (5) adapted to process the electrical received signal; and
   a display device (2) adapted to display the results of said processing;
   wherein the electrical excitation signal is controlled by the electrical transmit circuitry (4) so that the envelope of the transmit signal has an amplitude rise time significantly less that its amplitude decay time so that, in use, the demodulated signal is not more than one cycle in duration.

5. The apparatus of claim 4, wherein the electrical transmit circuitry (4) is adapted to control the electrical excitation signal such that the demodulated signal is a quasi-single cycle pulse.

6. The apparatus of claim 4 or claim 5 wherein the first transducer (1) is adapted to transmit the acoustic transmit signal in response to an applied electrical excitation signal and wherein the apparatus further includes a second transducer adapted to produce the electrical received signal in response to the acoustic receive signal.

7. The apparatus of any one of claims 4 to 6 wherein the ultrasound apparatus is a hand held diagnostic ultrasound unit.

8. The apparatus of any one of claims 4 to 7 wherein the first transducer is a transducer array.

**Patentansprüche**

1. Verfahren zur medizinischen Ultraschallabbildung eines Körpers (3) mit nicht-linearen akustischen Ausbreitungseigenschaften, wobei in dem Verfahren
ein akustisches Sendesignal in der Form eines langsam zerfallenden Signalbündels einschließlich wenigstens einer akustischen Sendefrequenz so gesendet wird, dass wenigstens ein Teil der akustischen Energie des Sendesignals in den Körper (3) gesendet wird,
der Körper (3) in Erwiderung auf die akustische Energie eine Demodulation des Sendesignals als ein demoduliertes Signal erzeugt, und
ein akustisches Empfangssignal mit Echos des demodulierten Signals empfangen wird, wobei das Empfangssignal eine Frequenz hat, die in etwa gleich der Frequenz des demodulierten Signals ist, wobei die Hüllkurve des Sendesignals eine Amplitudenanstiegszeit hat, die signifikant geringer ist als die Amplitudenzerfallszeit, so dass das demodulierte Signal nicht mehr als einen Zyklus andauert.

2. Verfahren nach Anspruch 1, wobei das demodulierte Signal einen quasi einzigen Pulszyklus hat.

3. Verfahren nach einem der vorstehenden Ansprüche, wobei der abzubildende Körper wenigstens ein Teil eines lebenden Säugetiers ist.

4. Gerät zur medizinischen Ultraschallabbildung eines Körpers (3) mit nicht-linearen akustischen Ausbreitungseigenschaften, mit
einem ersten Wandler (1), der dazu ausgelegt ist, ein akustisches Sendesignal in der Form eines langsam zerfallenden Signalbündels in Erwiderung auf ein angelegtes, benutzervariables, elektrisches Anregungssignal auszusenden und ein elektrisches Empfangssignal in Erwiderung auf ein akustisches Empfangssignal zu erzeugen, wobei das elektrische Empfangssignal Echos eines demodulierten Signals aufweist, die durch den Körper in Erwiderung auf das akustische Sendesignal erzeugt wurden,
einer elektrischen Sendeschaltung (4), die dazu ausgelegt ist, das benutzervariable elektrische Anregungssignal zu erzeugen,
einer elektrischen Empfangsschaltung (5), die dazu ausgelegt ist, das elektrische Empfangssignal zu verarbeiten, und
einer Anzeigevorrichtung (2), die dazu ausgelegt ist, die Ergebnisse der Verarbeitung anzuzeigen,
wobei das elektrische Anregungssignal durch die elektrische Sendeschaltung (4) so gesteuert wird, dass die Hüllkurve des Sendesignals eine Amplitudenanstiegsdauer hat, die signifikant geringer ist als die Amplitudenzerfallsdauer, so dass das demodulierte Signal in Gebrauch nicht mehr als einen Zyklus andauert.

5. Gerät nach Anspruch 4, wobei die elektrische Sendeschaltung (4) dazu ausgelegt ist, das elektrische Anregungssignal so zu steuern, dass das demodulierte Signal ein quasi einziger Pulszyklus ist.

6. Gerät nach Anspruch 4 oder 5, wobei der erste Wandler (1) dazu ausgelegt ist, das akustische Sendesignal in Erwiderung auf ein angelegtes elektrisches Anregungssignal zu senden, und wobei das Gerät ferner einen zweiten Wandler aufweist, der dazu ausgelegt ist, das elektrische Empfangssignal in Erwiderung auf das akustische Empfangssignal zu erzeugen.

7. Gerät nach einem der Ansprüche 4 bis 6, wobei das Ultraschallgerät eine diagnostische Ultraschalleinheit zum in der Hand halten ist.

8. Gerät nach einem der Ansprüche 4 bis 7, wobei der erste Wandler ein Wandler-Array ist.

**Revendications**

1. Procédé d'imagerie médicale par ultrasons d'un corps (3) présentant des propriétés de propagation acoustique non linéaire, le procédé comprenant les étapes ci-dessous consistant à :

transmettre un signal de transmission acoustique sous la forme d'une salve de signaux à déclin lent incluant au moins une fréquence acoustique de transmission, de sorte qu'au moins une partie de l'énergie acoustique du signal de transmission est transmise dans le corps (3) ;
le corps (3) produisant, en réponse à l'énergie acoustique, une démodulation du signal de transmission, sous la forme d'un signal démodulé ; et
recevoir un signal de réception acoustique comportant des échos du signal démodulé, le signal de réception présentant une fréquence approximativement égale à la fréquence du signal démodulé ;
dans lequel l'enveloppe du signal de transmission présente un temps de montée d'amplitude qui est considérablement inférieur à son temps de déclin d'amplitude, de sorte que la durée du signal démodulé n'est pas supérieure à un cycle.

2. Procédé selon la revendication 1, dans lequel le signal démodulé comporte une impulsion quasi monocycle.

3.  Procédé selon l'une quelconque des revendications précédentes, dans lequel le corps à imager est au moins une partie d'un mammifère vivant.

4.  Appareil pour l'imagerie médicale par ultrasons d'un corps (3) présentant des propriétés de propagation acoustique non linéaire, l'appareil incluant :

    un premier transducteur (1) apte à transmettre un signal de transmission acoustique sous la forme d'une salve de signaux à déclin lent, en réponse à un signal d'excitation électrique variable d'utilisateur appliqué, et à produire un signal électrique reçu, en réponse à un signal de réception acoustique, ledit signal électrique reçu comprenant des échos d'un signal démodulé produit par le corps en réponse au signal de transmission acoustique ;
    un montage de circuits de transmission électrique (4) apte à produire le signal d'excitation électrique variable d'utilisateur ;
    un montage de circuits de réception électrique (5) apte à traiter le signal électrique reçu ; et
    un dispositif d'affichage (2) apte à afficher les résultats dudit traitement ;
    dans lequel le signal d'excitation électrique est commandé par le montage de circuits de transmission électrique (4), de sorte que l'enveloppe du signal de transmission présente un temps de montée d'amplitude considérablement inférieur à son temps de déclin d'amplitude, de sorte que, en cours d'utilisation, la durée du signal démodulé n'est pas supérieure à un cycle.

5.  Appareil selon la revendication 4, dans lequel le montage de circuits de transmission électrique (4) est apte à commander le signal d'excitation électrique de sorte que le signal démodulé est une impulsion quasi monocycle.

6.  Appareil selon la revendication 4 ou 5, dans lequel le premier transducteur (1) est apte à transmettre le signal de transmission acoustique en réponse à un signal d'excitation électrique appliqué, et dans lequel l'appareil inclut en outre un second transducteur apte à produire le signal électrique reçu en réponse au signal de réception acoustique.

7.  Appareil selon l'une quelconque des revendications 4 à 6, dans lequel l'appareil à ultrasons est une unité à ultrasons de diagnostic portative.

8.  Appareil selon l'une quelconque des revendications 4 à 7, dans lequel le premier transducteur est un réseau de transducteurs.

Figure 1

*Figure 2*

*Figure 3*

Figure 4

*Figure 5*

Figure 6

Figure 7a

Figure 7b

Figure 7c

Figure 7d

Figure 7e

Figure 7f

Figure 8a

Figure 8b

Figure 8c

Figure 8d

Figure 8e

Figure 8f

EP 2 044 425 B1

*Figure 9*

Figure 10

Figure 11

EP 2 044 425 B1

Figure 12

23

Figure 13

Figure 14

Figure 15

Figure 16

**EP 2 044 425 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002147398 A1
- WO 2006003555 A1
- US 6440074 B1
- GB 1108567 A

**Non-patent literature cited in the description**

- Self-demodulation of amplitude- and frequency-modulated pulses in a thermoviscous fluid. *The Journal of the Acoustical Society of America,* vol. 94 (5), 2867
- Self-demodulation acoustic signatures for nonlinear propagation in glass beads. *Comptes Rendus Mecanique,* vol. 331 (2), 119-125